# FASCICULE DE BREVET EUROPEEN

(11) **EP 0 754 849 B1**
(45) Date de publication et mention de la délivrance du brevet: **19.04.2000**
(21) Numéro de dépôt: 96401529.1
(22) Date de dépôt: 11.07.1996
(51) Int. Cl.: F02K 1/70, F02K 1/56

(54) **Inverseur de poussée de turboréacteur à double flux à portes dissymétriques**
Schubumkehrvorrichtung für ein Zweikreistriebwerk mit unsymmetrischen Klappen
Double flux turbine thrust reverser with asymmetric doors

(30) Priorité: 12.07.1995 FR 9508410
(43) Date de publication de la demande: 22.01.1997
(73) Titulaire: HISPANO-SUIZA AEROSTRUCTURES, 76700 Gonfreville l'Orcher (FR)
(72) Inventeur: Lardy, Pascal, 76600 Le Havre (FR); Vauchel, Guy, Bernard, 76600 Le Havre (FR)
(74) Mandataire: Berrou, Paul

(56) Documents cités:
- WO-A-93/05291
- FR-A- 1 267 850
- US-A- 3 640 468

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autre cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

Nous appellerons capotage extérieur, l'ensemble constitué par la paroi extérieure de la nacelle

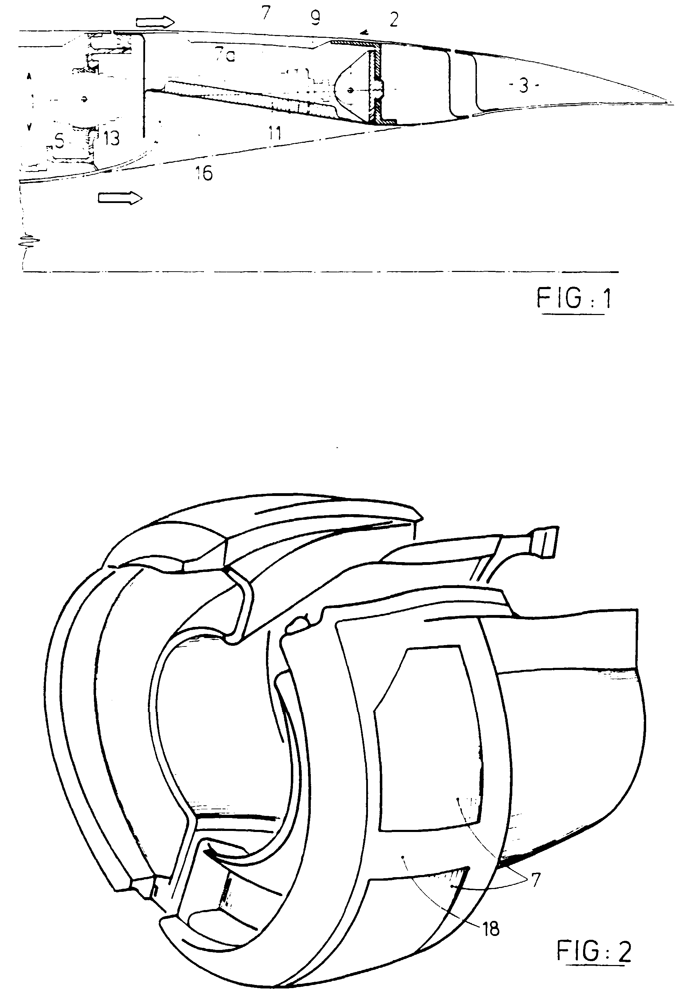

La figure 1 des dessins joints montre un exemple connu de réalisation d'un inverseur de poussée de ce type, appliqué comme le montre la vue schématique partielle en perspective de la figure 2, à un turboréacteur à double flux.

Le dispositif d'inversion est constitué de portes 7 formant une partie mobile 2 et constituant en position inactive, lors d'un fonctionnement en jet direct, une partie du capotage extérieur, et d'une structure fixe réalisant ce capotage extérieur en amont des portes, par une partie amont 1 en aval des portes par une partie aval 3 et entre les portes 7 par l'intermédiaire de poutres 18 qui relient la partie aval 3 du capotage extérieur à la partie amont 1 du capotage extérieur. Les portes 7 sont montées sur une circonférence du capotage extérieur et sont montées pivotantes dans une zone intermédiaire de leurs parois latérales sur les poutres 18 situées de part et d'autre de ces portes, ces parois latérales constituant avec les parois amont et aval, les parois qui relient la partie extérieure 9 des portes 7, qui constituent une partie de la paroi extérieure de la nacelle, à la partie intérieure 11 des portes 7, qui constituent une partie de la paroi extérieure du conduit.

La partie amont 1 de structure fixe comporte un cadre avant 6 qui sert de support aux moyens de commande des déplacements des portes 7, constitués par exemple par des vérins 7a.

En position activée, les portes 7 basculent de telle façon que la partie des portes situées en aval des pivots, vient obstruer plus ou moins totalement le conduit, et de telle façon que la partie amont des portes vient dégager un passage dans le capotage extérieur de manière à permettre au flux secondaire d'être canalisé radialement par rapport à l'axe du conduit. La partie amont des portes 7 fait saillie à l'extérieur du capotage extérieur pour des raisons de dimensionnement du passage qui doit être capable de laisser passer ce flux sans compromettre le fonctionnement du moteur. L'angle de pivotement des portes est ajusté de manière à permettre le passage du flux et de manière à supprimer la poussée de ce flux, voire à commencer à générer une contre poussée en générant une composante du flux dévié vers l'amont.

Les portes 7 sont également munies dans leur partie amont d'un becquet 13 faisant saillie vers l'avant, lorsque les portes 7 sont déployées, par rapport à la face interne des portes, de manière à dévier le flux vers l'amont et achever d'obtenir la composante de contre poussée.

Des exemples connus de réalisation sont illustrés par exemple par FR 1.482.538 ou par FR-A-2 030 034.

Par ailleurs, FR-A-1 267 850 décrit un inverseur de poussée du type dit à cascade, à canaux munis de grilles d'aubes et prévoyant une répartition dissymétrique des flux éjectés.

Il existe aussi des dispositifs tels que celui décrit par US 3 605 411 qui permettent d'avoir une saillie de becquet vers l'amont lorsque les portes sont déployées tout en permettant une continuité de la paroi externe du conduit lorsque les portes ne sont pas déployées. On connaît également par FR-A-2 618 853 un dispositif où le becquet est escamoté en jet direct de façon à optimiser les performances du moteur.

Dans certaines applications, comme représenté sur la figure 1, les becquets 13 font saillie par rapport à la face interne 11 des portes 7, même en jet direct sans pour autant faire saillie dans le conduit qui est dans cet exemple muni de cavités 16 légèrement préjudiciables aux performances du moteur alors que le dispositif d'inversion devient extrêmement simple.

La combinaison des becquets et des bords de déviation permettent également d'optimiser la direction d'éjection du flux comme indiqué par FR-A-2 680 547.

Dans les réalisations connues d'inverseur de poussée de turboréacteur à portes et notamment dans les exemples cités, les portes 7 ont une largeur identique ou très proche pour toutes les portes. Lors du fonctionnement en inversion de poussée, le même débit fluide ou très proche passe par chaque puits dégagé par le déploiement de chaque porte. Dans ce cas le pilotage radial des nappes du flux inversé se fait relativement au plan médian de chaque porte contenant l'axe géométrique de rotation du turboréacteur. L'orientation radiale de chacun de ces plans dépend directement de la répartition des portes à largeur sensiblement identique.

Dans une application particulièrement visée par l'invention où l'inverseur de poussée est installé sous l'aile de l'avion et comporte quatre portes disposées, comme dans l'exemple de réalisation schématisé sur la figure 2, deux portes en position supérieure et deux portes en position inférieure. Cette disposition est en effet bien adaptée aux contraintes de ce type d'installation, à savoir éviter la réingestion des nappes de flux dans le turboréacteur concerné ou dans les autres turboréacteurs de l'avion et éviter des interférences aérodynamiques avec l'aile et le fuselage de l'avion. Quatre directions privilégiées d'orientation des nappes du flux inversé sont ainsi déterminées : deux directions supérieures de part et d'autre du mât d'avion en évitant de pénaliser la portance de l'aile et deux directions vers le bas, latéralement de part et d'autre de l'ensemble propulsif comprenant le turboréacteur. Ainsi, la moitié du débit fluide total est dévié par les deux portes supérieures et quels que soient les moyens classiques de pilotage des nappes du flux inversé appliqués, une composante est dirigée vers le haut, vers le plan de l'aile et en amont de l'aile.

Ces dispositions présentent toutefois un inconvénient majeur. En effet, en cas de déploiement intempestif des portes en vol, la pilotabilité de l'avion est compromise par les modifications engendrées sur la portance de l'aile.

Un inverseur de poussée du type précité répondant à ces conditions et minimisant les inconvénients des solutions connues antérieures est caractérisé en ce que, lorsque l'ensemble propulsif est monté sous l'aile d'un avion et l'inverseur comporte quatre portes, la largeur des portes supérieures est réduite par rapport à la largeur des portes inférieures.

En complément à ces dispositions, une largeur différente optimisée peut en outre être déterminée du point de vue latéral, d'un côté par rapport à l'autre.

D'autres caractéristiques et avantages de l'invention seront mieux compris à la lecture de la description qui va suivre d'un mode de réalisation de l'invention, en référence aux dessins annexés sur lesquels :
- la figure 1 représente une demi-vue schématique, en coupe longitudinale par un plan passant par l'axe de rotation d'un turboréacteur associé, d'un inverseur de poussée à portes pivotantes, en position fermées, d'un type connu et qui a fait précédemment l'objet d'une description ;
- la figure 2 représente une vue schématique en perspective d'un inverseur de poussée du type précité montré en position montée et avec les portes fermées ;
- la figure 3 représente une vue de face schématique d'un inverseur de poussée à portes pivotantes dans une position d'inversion de poussée, selon un mode de réalisation de l'invention ;
- la figure 4 représente suivant une vue analogue à celle de la figure 3 une variante de réalisation d'un inverseur de poussée conforme à l'invention.

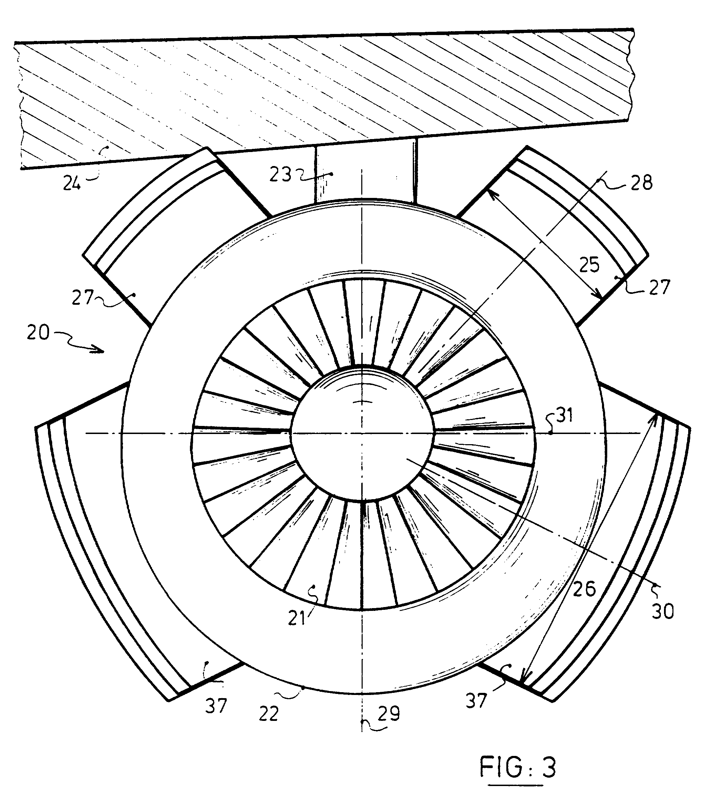

Selon un mode de réalisation de l'invention représenté sur la figure 3, un inverseur de poussée susceptible d'effectuer dans les phases de vol pertinentes d'un avion une inversion de flux du turboréacteur associé comporte les parties principales connues précédemment décrites dans un exemple connu de réalisation, en référence aux figures 1 et 2.

Dans l'application particulière représentée sur la figure 3, un ensemble propulsif 20 comportant un turboréacteur 21 monté dans une nacelle 22 est suspendu au moyen d'un mât 23 sous l'aile 24 d'un avion. Dans l'exemple représenté, l'inverseur de poussée comporte quatre portes pivotantes, deux portes 27 sont appelées supérieures par rapport à la position normale de l'avion au sol et deux portes 37 sont appelées inférieures. Le nombre de quatre portes est adapté au type de configuration représenté sur le dessin avec installation sous une aile. L'optimisation du nombre de portes tient compte notamment des effets induits par le pilotage des nappes du flux inversé. L'invention décrite ci-après en référence à la figure 3 reste applicable à un inverseur de poussée comportant un nombre différent de portes, au moins égal à deux ainsi que pour un type différent d'installation.

De manière remarquable et conforme à l'invention, la largeur des portes supérieures 27 de l'inverseur de poussée, repérée 25 sur la figure 3, est réduite par rapport à la largeur des portes inférieures 37, repérée 26 sur la figure 3. De cette façon, lors du fonctionnement en inversion de poussée, lorsque les portes de l'inverseur de poussée sont en position déployée telle que représentée sur la figure 3, le débit d'air éjecté vers le haut est réduit, ce qui diminue les éventuelles répercussions défavorables sur la pilotabilité de l'avion même en cas de déploiement intempestif et accidentel des portes. En outre, grâce à cette disposition, le plan médian de chacune des portes supérieures 27 dont la trace est repérée 28 sur la figure 3 a une orientation plus proche de la direction verticale repérée 29, ce qui diminue également les mêmes effets défavorables.

Il en résulte également que le débit éjecté vers le bas à travers les puits dégagés par le déploiement des portes inférieures 37 devient plus important. Toutefois les performances visées du point de vue non-réingestion sont maintenues car les risques de réingestion sont minimisés du fait que le plan médian de chacune des portes inférieures 37 dont la trace est repérée 30 sur la figure 3 a une orientation plus proche de la direction horizontale repérée 31.

Dans l'application de l'invention représentée sur la figure 3 où les portes de l'inverseur de poussée sont au nombre de quatre, la largeur 25 des deux portes supérieures 27 gauche et droite peut être identique et la largeur 26 des deux portes inférieures 37 gauche et droite respectivement identique, comme représenté sur la figure 3.

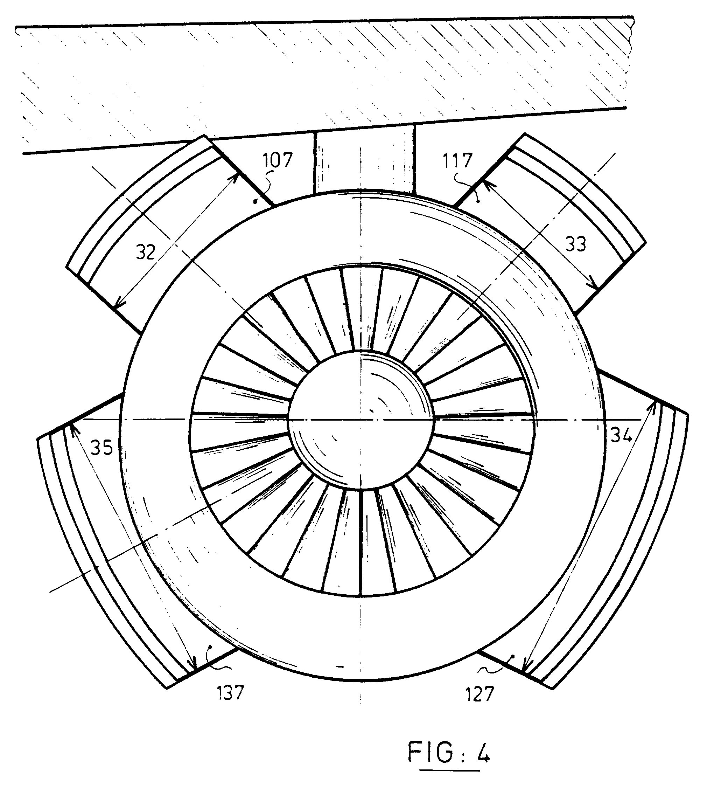

Les variantes de réalisation peuvent être appliquées dans ce cas. Des variations de largeur optimisées en vue du résultat recherché d'amélioration de la pilotabilité de l'avion en cas de déploiement intempestif des portes peuvent être introduites entre la porte supérieure gauche et la porte supérieure droite. De la même manière, une largeur différente peut être prévue pour la porte inférieure droite de celle de la porte inférieure gauche. L'optimisation dans ce cas peut être faite en fonction de la largeur des portes supérieures ou en fonction de contraintes particulières de pilotage des nappes du flux inversé comme par exemple la condition d'envoyer moins de débit fluide dans la direction du fuselage de l'avion. La figure 4 montre un exemple de réalisation d'une telle variante où la largeur 32 de la porte supérieure droite 107 est supérieure à la largeur 33 de la porte supérieure gauche 117 et la largeur 34 de la partie inférieure gauche 127 est supérieure à la largeur 35 de la porte inférieure droite 137, les largeurs de portes supérieures restant, conformément à l'invention, inférieures aux largeurs des portes inférieures.

## Revendications

1. Inverseur de poussée de turboréacteur à double flux comportant des portes pivotantes (27, 37 ; 107, 117, 127, 137) susceptibles, en position fermée, lors d'un fonctionnement en jet direct, de s'intégrer dans la paroi extérieure du conduit de flux en arrière de la soufflante de turboréacteur, et susceptibles en outre chacune de pivoter sous l'action d'un moyen de commande des déplacements de manière à constituer des obstacles de déviation de flux lors d'un fonctionnement en inversion de poussée dans lequel l'ensemble propulsif comprenant ledit turboréacteur est monté sous l'aile d'un avion et l'inverseur comporte quatre portes, caractérisé en ce que la largeur (25 ; 32,33) des portes supérieures (27 ; 107,117) est réduite par rapport à la largeur (26 ; 34,35) des portes inférieures (37 ; ; 127,137) de manière à obtenir lors de l'inversion de poussée un débit fluide éjecté vers le haut moins important que le débit éjecté vers le bas.

2. Inverseur de poussée de turboréacteur à double flux selon la revendication 1 dans lequel les largeurs respectives (32,33) des portes supérieures (107,117) sont différentes.

3. Inverseur de poussée de turboréacteur à double flux selon l'une des revendications 1 ou 2 dans lequel les largeurs respectives (34,35) des portes inférieures (127,137) sont différentes.

## Patentansprüche

1. Schubumkehrvorrichtung für ein Zweikreis-Turbotriebwerk mit schwenkbaren Klappen (27, 37; 107 117, 127, 137), die sich in Schließstellung im Direktstrahlbetrieb in die Außenwand des Strömungskanals hinter dem Triebwerkbläser einfügen können und außerdem unter der Wirkung einer Verschiebungsantriebsvorrichtung so verschwenkbar sind, daß sie im Schubumkehrbetrieb Hindernisse für die Ablenkung der Strömung bilden, wobei der das Turbotriebwerk umfassende Antriebskomplex unter dem Flügel eines Flugzeugs montiert ist und die Schubumkehrvorrichtung vier Klappen aufweist,
dadurch gekennzeichnet,
daß die Breite (25; 32, 33) der oberen Klappen (27, 107, 117) gegenüber der Breite (26; 34, 35) der unteren Klappen (37, 127, 137) so reduziert ist, daß bei der Schubumkehr der nach oben ausgestoßene Fluiddurchsatz weniger groß ist als der nach unten ausgestoßene Fluiddurchsatz.

2. Schubumkehrvorrichtung für ein Zweikreis-Turbotriebwerk nach Anspruch 1, bei dem die Breiten (32, 33) der oberen Klappen (107, 117) jeweils verschieden sind.

3. Schubumkehrvorrichtung für ein Zweikreis-Turbotriebwerk nach Anspruch 1 oder 2, bei dem die Breiten (34, 35) der unteren Klappen (127, 137) jeweils verschieden sind.

## Claims

1. A thrust reverser of a bypass turbojet engine comprising pivoting doors (27, 37; 107, 117, 127, 137) adapted when in the closed forward thrust position to be integrated in the outer wall of the flow duct to the rear of the fan of the engine and also each adapted to be pivoted by actuating means so as to form flow-diverting means in reverse thrust operation, wherein the propulsion system comprising the turbojet engine is mounted below the wing of an aircraft and the reverser comprises four doors, characterised in that the width (25; 32, 33) of the upper doors (27; 107, 117) is less than the width (26; 34, 35) of the lower doors (37; 127, 137) so as to obtain in thrust reversal operation an upwardly directed fluid discharge which is less than the downwardly directed discharge.

2. A thrust reverser according to claim 1 wherein the widths (32, 33) of the upper doors (107, 117) are different from one another.

3. A thrust reverser according to claim 1 or claim 2 wherein the widths (34, 35) of the lower doors (127, 137) are different from one another.
